## Europäisches Patentamt

## European Patent Office

## Office européen des brevets

(19)

(11) Publication number: **0 145 937**
**B1**

(12) **EUROPEAN PATENT SPECIFICATION**

(45) Date of publication of patent specification: **09.09.87**

(51) Int. Cl.⁴: **G 02 B 6/38**

(21) Application number: **84113433.1**

(22) Date of filing: **07.11.84**

(54) Optical-fibre connector.

(30) Priority: **10.11.83 IT 6817383**

(43) Date of publication of application:
**26.06.85 Bulletin 85/26**

(45) Publication of the grant of the patent:
**09.09.87 Bulletin 87/37**

(84) Designated Contracting States:
**DE FR GB NL**

(56) References cited:
**DE-A-2 610 368**
**DE-A-2 916 763**
**US-A-4 384 761**

(73) Proprietor: **CSELT Centro Studi e Laboratori Telecomunicazioni S.p.A.**
**Via Guglielmo Reiss Romoli, 274**
**I-10148 Turin (IT)**

(72) Inventor: **Grego, Giorgio**
**Via Amati, 130 int.5**
**I-10078 Venaria (Torino) (IT)**

(74) Representative: **Riederer Freiherr von Paar zu Schönau, Anton et al**
**Van der Werth, Lederer & Riederer Freyung 615**
**Postfach 2664**
**D-8300 Landshut (DE)**

Courier Press, Leamington Spa, England.

## Description

The present invention relates to physical carriers for telecommunications systems using light radiation and more particularly it concerns an optical fibre connector.

As known, one of the main problems to be solved when using optical fibres in transmission systems is that of making good connections between fibres, so as to reduce the coupling losses to a minimum.

Such losses arise from the displacement, separation and misalignment errors of the two fibre ends to be connected, (i.e. lack of parallelism and lateral axis displacement), as well as from refractive index discontinuity.

The alignment of the two fibre ends is generally obtained by a sleeve or a V-groove and the fibres are held in position by means of adhesives of elastic elements. Refractive-index matching is obtained by interposing suitable liquids between the two fibre-ends.

Such sleeve or V guides are suitable for permanent splices, but are ill-suited for connectors, as their structure fragility does not allow the repeated connections and disconnections that a connector generally undergoes.

Optical fibre connectors exploiting the forces exerted on the fibre ends by a magnetic field are also known.

Such devices, described for example in U.K. Patent No. 2020055 in the name of same Applicant, or in U.S. Patent No. 4062620 in the name of Telecommunications Radioélectriques et Téléphoniques T.R.T., can operate only if the fibre ends are suitably prepared, i.e. by inserting them into small capillary tubes made of ferromagnetic material or by depositing a layer of such material on them by means of an electrochemical process. Yet, these operations can prove particularly difficult owing to reduced fibre size especially when the fibre has already been installed in an underground duct.

US—A—4 384 761 describes a switch in which the cantilevered end of an optical fibre is repositioned by buoyancy effects created by a ferromagnetic fluid acted upon by a magnetic field. V-shaped grooves are used to ensure precise alignment of the fibre end.

The above disadvantages are overcome by the optical-fibre connector of the present invention, which allows optical fibres to be connected without end preparation and which ensures their alignment without the use of mechanical elements having high accuracy or adjustment requirements.

Alignment is obtained by exploiting the special properties of the so-called ferromagnetic fluids. These fluids are colloids in which very small ferromagnetic particles are suspended in a carrier liquid. The suspension is stable, even though particle density is higher than liquid density, because the particle continuously strikes the carrier liquid molecules in random thermal agitation. If the thermal energy is equal to or higher than the gravitational energy necessary to raise the particles to the height that they have attained in the vessel containing the fluid and if the particle dimensions do not exceed a few nanometers the suspension is stable. The aggregation between the particles, due to magnetic and van der Waals forces is avoided by coating each particle with a molecular film of a surfactant, which acts as an elastic surface.

The application of a magnetic field to a ferromagnetic fluid causes a volume force. A force proportional to the product of the absolute value of the magnetic momentum and the space gradient of the modulo of the magnetic field acts on each magnetic particle. More particularly, in a ferromagnetic fluid at rest the sum of the energy due to hydrostatic pressure and the magnetic energy is constant.

The present invention provides an optical fibre connector containing elements capable of generating a magnetic field in which fibre end alignment is achieved by means of the magnetic field and in which refractive index matching between the fibre ends is accomplished by means of a matching liquid, characterized by a cylindrical tube of non-ferromagnetic material whose internal diameter exceeds that of the fibres to be connected and into which the fibre ends have been inserted together with a ferromagnetic fluid after the fibre end faces have been covered with said index-matching liquid, the elements being positioned about the tube so as to be able to generate a magnetic field with an intensity minimum coinciding with said tube's axis and whose intensity increases with radial distance from the axis, the connector being such that the opposed fibre end faces are aligned solely by the effect of the ferromagnetic fluid responding to the magnetic field.

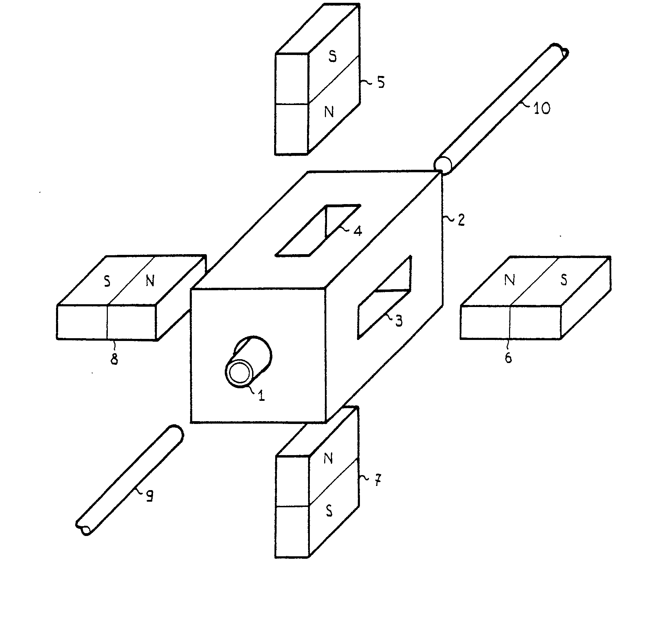

The foregoing and other characteristics of the present invention will be made clearer by the following description of a preferred embodiment thereof, shown on the accompanying drawing and given by way of example.

Reference 1 denotes a small tube made of non-ferromagnetic material, e.g. glass, with the inner diameter greater than the external diameter of optical fibres. The small tube is housed in a cylindrical hole made in a block of non-ferromagnetic material 2, forming the connector body.

Four cavities are made in the block in symmetrical positions around the hole (3 and 4 are shown in the drawing) to house four magnetic bars 5, 6, 7 and 8, each generating the same field intensity. Said bars are held in contact with the small tube 1, with the north poles towards the inside and south poles towards the outside or vice versa. In this way an axial zone, whose magnetic-field intensity is minimum, is obtained inside the small tube.

Fibre ends 9 and 10 are then inserted into the small tube till they contact, after placing a few drops of refractive-index matching liquid on the end faces.

A small quantity of ferromagnetic fluid is then injected, e.g. by a syringe, inside the small tube. This fluid flows towards the middle zone, where the magnetic field is strongest. Meanwhile hydrostatic fluid pressure inside the fluid becomes such as to maintain the sum of pressure and magnetic field energies constant. An axial region is thus obtained coincident with that where magnetic-field energy is maximum (minimum intensity) and where hydrostatic pressure is minimum.

The optical fibres and the index-matching liquid are consequently drawn into the axial region where the pressure is minimum, and are aligned. To obtain maximum light-energy transfer the liquid interposed between the fibres ends ought not to be miscible with the magnetic fluid. This ensures that opaque ferromagnetic particles, which have moved away from the small cylinder axis due to a ferromagnetic field effect, cannot be interposed between the end faces of the fibres.

As an example if the fibre ends to be connected have a length of about 30 mm inside the small tube, then their weight would be about 0.8 mg. The buoyant force due to fluid contributes to suspend the ends for about a third of their weight, for this reason only about 0.5 mg of the fibre weight needs to be counterbalanced by the fluid force due to electromagnetic field.

In case of a fibre having a diameter of 120 µm, inserted a distance of 30 mm into the small tube, the surface on which the magnetic force acts is about 3.6 mm$^2$, and hence the force is $2 \cdot 3.6 = 7.2$ g, considerably higher than the value of 0.5 mg necessary to raise the fibre.

It is clear that what is described has been given only by way of a non-limiting example. Variations and modifications to the above embodiments may of course be made without departing from the scope of the invention.

For example, the magnetic field could be generated by electro-magnets and not by permanent magnets. In addition, the connector shown in the drawing can be housed in a container equipped at the ends with suitable devices (e.g. a gland) suited to fix and protect the optical fibre ends which are normally within an optical cable.

## Claims

1. An optical fibre connector containing elements capable of generating a magnetic field in which fibre end alignment is achieved by means of the magnetic field and in which refractive index matching between the fibre ends is accomplished by means of a matching liquid, characterized by a cylindrical tube (1) of non-ferromagnetic material whose internal diameter exceeds that of the fibres to be connected and into which the fibre ends (9, 10) have been inserted together with a ferromagnetic fluid after the fibre end faces have been covered with said index-matching liquid, the elements being positioned about the tube so as to be able to generate a magnetic field with an intensity minimum coinciding with said tube's axis and whose intensity increases with radial distance from the axis, the connector being such that the opposed fibre end faces are aligned solely by the effect of the ferromagnetic fluid responding to the magnetic field.

2. Connector as claimed in claim 1, characterized in that said magnetic field is obtained by permanent magnets (5, 6, 7, 8) symmetrically arranged around said tube (1), so as to present towards the tube axis the same magnetic polarity.

3. Connector as claimed in claim 1, characterized in that said magnetic field is generated by electromagnets.

## Patentansprüche

1. Verbinder für Lichtleitfasern, mit Bauteilen zum Erzeugen eines Magnetfelds, wobei die Ausrichtung der Faserenden durch das Magnetfeld erhalten wird und die Anpassung der Brechzahlen zwischen den Faserenden mit Hilfe einer Anpassungsflüssigkeit erreicht wird, gekennzeichnet durch ein zylindrisches Röhrchen (1) aus nichtferromagnetischem Material mit einem den Durchmesser der zu verbindenden Fasern übertreffenden Innendurchmesser, in das die Faserenden (9, 10) zusammen mit einer ferromagnetischen Flüssigkeit eingeführt worden sind, nachdem die Endflächen mit der Indexanpassungsflüssigkeit bedeckt worden waren, wobei die Bauteile so um das Rohr angeordnet sind, daß sie ein Magnetfeld mit einem Feldstärkeminimum an der Achse des Röhrchens und einer mit dem radialen Abstand von der Achse ansteigenden Feldstärke erzeugen, und der Verbinder so gebaut ist, daß die gegenüberliegenden Faserendflächen ausschließlich durch den Effekt der ferromagnetischen Flüssigkeit, die auf das Magnetfeld reagiert, ausgerichtet werden.

2. Verbinder nach Anspruch 1, dadurch gekennzeichnet, daß das Magnetfeld durch Permanentmagneten (5, 6, 7, 8) erhalten wird, die symmetrisch um das Röhrchen (1) angeordnet sind und der Röhrchenachse die selbe magnetische Polarität zuwenden.

3. Verbinder nach Anspruch 1, dadurch gekennzeichnet, daß das Magnetfeld durch Elektromagneten erzeugt wird.

## Revendications

1. Connecteur pour fibres optiques qui contient des éléments capables d'engendrer un champ magnétique dans lequel l'alignement des extrémités des fibres est obtenu à l'aide du champ magnétique et l'adaptation des indices de réfraction entre les extrémités des fibres est effectuée au moyen d'un liquide adaptateur, caractérisé par un tube cylindrique (1) de matière non-ferromagnétique, ayant le diamètre interne plus grand que celui des fibres à connecter et dans lequel les extrémités des fibres (9, 10) sont insérées en même temps qu'une substance fluide ferromagnétique après que leurs faces terminales ont été couvertes par ledit liquide adaptateur d'indice, les éléments étant disposés autour du tube de manière à produire un champ magnétique ayant une intensité minimale coïncident avec l'axe dudit tube et une intensité croissante avec la distance radiale dudit axe, le connecteur étant tel que les faces terminales opposées des fibres sont alignées uniquement par effet de la substance fluide ferromagnétique, qui répond au champ magnétique.

2. Connecteur suivant la revendication 1, caractérisé en ce que ledit champ magnétique est obtenu à l'aide d'aimants permanents (5, 6, 7, 8) placés symétriquement autour dudit tube (1) de manière à présenter vers l'axe du tube la même polarité magnétique.

3. Connecteur suivant la revendication 1, caractérisé en ce que ledit champ magnétique est engendré par des électro-aimants.